# EUROPEAN PATENT APPLICATION

(11) **EP 4 718 063 A1**
(43) Date of publication of application: **01.04.2026**
(21) Application number: 24383035.3
(22) Date of filing: 26.09.2024
(51) Int. Cl.: G01N 21/65, G01N 21/71, G01J 3/44

(54) **DEVICE FOR OBTAINING DATA FROM A SAMPLE**

(71) Applicant: Instituto Nacional De Tecnica Aeroespacial "Esteban Terradas", 28850 Torrejón de Ardoz (ES)
(72) Inventor: RODRÍGUEZ PÉREZ, Pablo, 28850 Torrejón de Ardoz (ES); BENITO PAREJO, Marina, 28850 Torrejón de Ardoz (ES); BELENGUER DÁVILA, Tomás, 28850 Torrejón de Ardoz (ES); SANZ PALOMINO, Miguel, 28850 Torrejón de Ardoz (ES); MUÑOZ REBATE, Ignacio, 28850 Torrejón de Ardoz (ES)
(74) Representative: TRBL Intellectual Property

(57) **Abstract**

The present invention provides a device for obtaining data from a sample. This device comprises an external equipment with a laser source, a Raman spectrometer and an external LIBS spectrometer and a handheld probe. An excitation barrel (1) is configured to produce a collimated laser beam, the first folding mirror (2) is arranged to reflect the collimated laser beam and the first dichroic (3) is configured to project the reflected collimated laser beam into a first direction. A LIBS excitation source (6) is configured to produce a pulsed laser beam, a beam expander (7) is configured to produce an expanded laser beam with the same collimation status as the collimated laser beam, the second folding mirror (8) is arranged to reflect the expanded laser beam and the second dichroic (9) is configured to project the reflected expanded laser beam into the first direction. A focuser (4) is arranged in the first direction and is arranged to receive the reflected collimated laser light and the reflected expanded laser beam and focus them on a focusing point. The device further comprises a Raman collection barrel (5) and a LIBS collection barrel (10). Finally, an optical component (12) is configured to reflect part of the sample light coming from the focuser (4), a diaphragm (13) is configured to receive the light reflected by the optical component (12) and a camera system is configured to receive the light which passes through the diaphragm (13).

## Description

### TECHNICAL FIELD

This invention belongs to the field of devices for analysing physical properties of materials.

### STATE OF THE ART

Different methods are known for assessing the physical and chemical properties of a new material or element. Some of these techniques are costly and/or need specific conditions to be performed. Others need bulky instruments and cannot be easily carried out on field.

There are two techniques based on spectroscopy, which may help scientists to know more about the properties of a substance. First one is Raman spectroscopy. This technique needs specific luminous conditions, since light intensity of this signal is very low. Second one is Laser-induced breakdown spectroscopy (LIBS). This second technique is a destructive technique based on emitting a high-energy laser pulse to the sample to be and analyse the formed plasma cloud.

The combination of these two techniques is effective to know more about an unknown material, and has proven to be very useful to scientists.

However, these techniques need different and specific conditions. The only devices which are known to perform these two techniques are heavy laboratory devices. These cannot be used on field, since they cannot be carried out by a human and cannot be deployed, e.g., in contact with a big lunar rock.

Therefore, a handheld device which can perform these two techniques is sought.

### DESCRIPTION OF THE INVENTION

The invention provides an alternative solution for providing a portable device for this aim by means of a device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a device for obtaining data from a sample, the device comprising
an external equipment which comprises an external laser source configured to generate laser light, a Raman spectrometer and an external LIBS spectrometer; and
a handheld probe comprising a first module, a second module, a third module, a fourth module, a fifth module and a focuser and a camera module,
   wherein
the first module comprises an excitation barrel, a first folding mirror and a first dichroic, wherein the excitation barrel is connected to the external laser source and is configured to receive laser light and to produce a collimated laser beam, the first folding mirror is arranged to receive and reflect the collimated laser beam and the first dichroic is configured to receive the collimated laser beam reflected by the first folding mirror and project the reflected collimated laser beam into a first direction;
the second module comprises a LIBS excitation source, a beam expander, a second folding mirror and a second dichroic, wherein the LIBS excitation source is configured to produce a pulsed laser beam, the beam expander is configured to receive the pulsed laser beam and produce an expanded laser beam with the same collimation status as the collimated laser beam, the second folding mirror is arranged to receive and reflect the expanded laser beam and the second dichroic is configured to receive the expanded laser beam reflected by the second dichroic and project the reflected expanded laser beam into the first direction;
the focuser is arranged in the first direction and is arranged to receive the reflected collimated laser beam and the reflected expanded laser beam and focus them on a focusing point;
the third module comprises a Raman collection barrel which is configured to receive sample light from the focuser and focus the received sample light on a first optical fibre which communicates with the external Raman spectrometer;
the fourth module comprises a LIBS collection barrel which is configured to receive light emitted by a LIBS plasma cloud and focus the received light on a second optical fibre which communicates with the external LIBS spectrometer
the fifth module comprises an optical component configured to reflect part of the sample light coming from the focuser, a diaphragm configured to receive the light reflected by the optical component and a camera system comprising an optical objective and a detector, the camera system being configured to receive the light which passes through the diaphragm..

The operation of this device is based on the emission of two laser beams: a collimated laser beam coming from a first module, and an expanded laser beam coming from a second module. The collimated laser beam is intended to impinge on a sample, so that the sample reflects light to be analysed by a Raman spectrometer, and the expanded laser beam is intended to destroy the sample, so that a LIBS spectrometer may analyse the plasma cloud formed in this process. To be sure that both laser beams are applied on the same point, the beam expander is configured to receive the pulsed laser beam and produce an expanded laser beam with the same collimation status as the collimated laser beam of the first module. Further, a camera system is also arranged to capture the image of the sample; the light which is sent to the camera system is light reflected from the sample. A small percentage or a narrow wavelength range from the light to be received by the Raman collection barrel is reflected to the camera system. Hence, when no Raman excitation is sent (and only ambient light or projected light is reflected by the sample), this light is enough for the camera system to provide information to the display. When Raman excitation is sent, despite this small percentage is deviated, Raman collection barrel may use the light without a major interference.

This device can be used by a scientist to identify some interesting properties of the composition of an unknown substance which may be located on field. There is no need to collect a sample and take it to a bulky facility to perform a detailed analysis. This device contains a camera which obtains an image of the focusing point, ensuring that the Raman and LIBS analysis are performed in this focusing point, which can be chosen by the user. Data of the LIBS spectroscopy and the Raman spectroscopy of the substance in the focusing point are obtained by the same equipment, which is easily transported by the user.

In some particular embodiments, the device further comprises a display connected to the camera, wherein the camera is configured to send a video signal to the display.

A display provides information to the user so that he can choose the exact point where the two analysis are to be performed.

In some particular embodiments, the device further comprises three pointers, each pointer comprising a tip, wherein the three tips of the pointers define a plane which contains the focusing point.

For the analysis to be done, the device needs to be held so that the sample is located in the focusing point. To help the user to keep the device in this position, a set of pointers are provided, so that the user may lay the device on the sample in a stable way, so that the two analysis are performed over the desired point.

In some particular embodiments, the device further comprises a visible light source, which is configured to project light over a zone which includes the focusing point.

This light source helps the camera to obtain images in a good condition, so that the user is able to select the correct point where the analysis will be made.

In some particular embodiments, the device further comprises a third folding mirror arranged in the path between the diaphragm and the camera system.

The third folding mirror is not strictly necessary, but it provides a more compact solution, since it allows the camera system to be oriented according to the main direction, and being arranged close to the rest of the elements. Without the third folding mirror, it would be possible to arrange the camera, but it would be further and in a different orientation, and this would result in a less compact handheld probe.

In some particular embodiments, the optical component is a beam sampler, which causes the reflection of a small amount of light in all the wavelengths. This small amount of light is enough for the camera system, and does not affect the analysis of the Raman collection barrel. In other embodiments, the optical component may be a dichroic which reflects visible light below the Raman excitation wavelength and lets the light in the Raman spectrum pass towards the Raman collection barrel.

In some particular embodiments, the optical component is a third dichroic, which causes the reflection of visible light with a wavelength lower than the Raman excitation source to the camera system.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

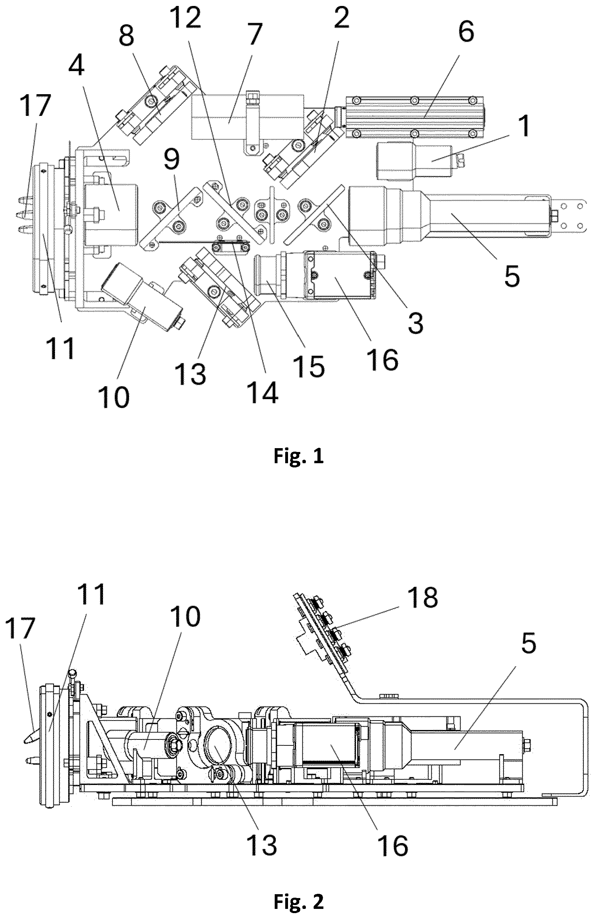

Figures 1 and 2 show two different perspectives of a device for obtaining data from a sample according to the invention.

In these figures, the following reference numbers have been used:
- 1: Raman excitation barrel
- 2: First folding mirror
- 3: First dichroic
- 4: Focuser
- 5: Raman collection barrel
- 6: LIBS excitation source
- 7: Beam expander
- 8: Second folding mirror
- 9: Second dichroic
- 10: LIBS collection barrel
- 11: Light source
- 12: Beam sampler
- 13: Diaphragm
- 14: Third folding mirror
- 15: Optical objective
- 16: Detector
- 17: Stability pointer
- 18: Display

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

Figures 1 and 2 show two different perspectives of a device for obtaining data from a sample according to the invention (Figure 1 has a cut so that element 18 does not interfere with the plant view of the device). This device comprises several elements, which will be described below.

Firstly, the device comprises an external equipment (not seen in this figure) which comprises an external laser source configured to generate laser light, a Raman spectrometer and an external LIBS spectrometer. The external laser source is configured to produce laser light which will be fed to the different elements of the device to perform some tests, as will be described below. The Raman spectrometer and the external LIBS spectrometer are configured to receive information from the different elements, to produce the required results.

Secondly, the device comprises a handheld probe which contains different modules, each one being intended to perform a different function within the device.

A first module comprises a Raman excitation barrel 1 which is configured to collimate the light coming from the external laser source. This external laser source, which was contained in the external equipment, is connected to the Raman excitation barrel 1 by means of an optic fibre. This Raman excitation barrel 1 is configured to produce a collimated laser light.

The collimated laser light is received and reflected by a first folding mirror 2, which directs the reflected collimated laser light to a first dichroic 3. This first dichroic is a bandpass filter which allows light in the Raman wavelength being reflected and incorporated into the main path, which is defined by the first direction d. Therefore, after the collimated laser light is filtered by the first dichroic 3, a filtered Raman excitation signal is projected in the first direction d.

This Raman excitation signal is focused on the focusing point by the probe's focuser 4. The focuser 4 contains a plurality of lens which focus the Raman excitation signal into the focusing point. When the sample reflects light, the same focuser 4 collects the Raman reflection, which goes through the main optical path (which is the same first direction, but in an opposite sense) and reaches the Raman collection barrel 5. This Raman collection barrel 5 contains optical elements which filter out the residual straylight from the excitation light and focus the Raman reflection on the Raman collection optical fiber, which transmits this signal to the external Raman spectrometer.

It is important to emphasize that the Raman reflection crosses two dichroic elements 3, 9, and a beam sampler 12 before reaching the Raman collection barrel 5. One of them is the first dichroic element 3, which is configured to reflect light coming from the first folding mirror 2. However, when light is received in the main direction, the first dichroic element 3 allows this light pass directly to the Raman collection barrel 5. The same happens with the other dichroic element 9 and the beam sampler 12, which will be presented afterwards.

The LIBS path will be now explained. The handheld probe contains a LIBS excitation source 6 which is configured to output a low-divergence pulsed laser beam that firstly goes through a beam expander 7, used to adjust the beam diameter and the focus position. The LIBS expanded laser beam is then received by a second folding mirror 8, which reflects the expanded laser beam into a second dichroic 9. The second dichroic 9 is one of the two elements which are located in the main path. Hence, it has two different aims: firstly, filter and reflect the expanded laser beam received from the second folding mirror 8, projecting a filtered expanded laser beam into the first direction d, so that it is afterwards received by the focuser 4. To do so, when the second dichroic 9 receives light in the direction from the second folding mirror 8, the second dichroic 9 filters the light with a wavelength lower than 700 nm and only reflects light with a wavelength higher than 700 nm into the first direction d. Consequently, when this second dichroic 9 receives light reflected from the object, which comes in the main direction, it allows this light to pass directly to the Raman collection barrel 5.

Once the filtered expanded laser beam reaches the focuser 4, it is focused on the focusing point, causing the destruction of the sample, due to the high intensity of this pulsed laser beam. A plasma cloud is formed, and this plasma cloud is received by the LIBS collection barrel 10, which focus the received signal on an optical fibre that transmits the signal towards an ensemble of spectrometers, whose configuration depends on the spectral range and resolution required by the specific application. This LIBS collection barrel 10 is placed close to the focuser 4, without the intermediation of any mirror or dichroic, so that the light spectrum of the plasma cloud can be captured as widely as possible.

Co-aligned with these two subsystems (LIBS and Raman), there is a vision subsystem. This vision subsystem provides the user with the ability to select the specific point to be analysed. In an heterogeneous material, it may be important to be able to select a specific point where these two tests are performed.

To provide this functionality, the device further comprises the vision subsystem. This vision subsystem comprises a light source 11 which provides a homogeneous irradiance over the focusing plane. The visible reflected light crosses the two dichroic elements 3, 9, and a beam sampler 12, which have been mentioned earlier. The first dichroic 3 and the second dichroic 9 allow visible light to pass in the first direction without any filtering, but the beam sampler 12, while allows the Raman light to pass, it also reflects a small portion of visible light towards a diaphragm 13, which is configured to set the camera depth of field. Then, the light arrives at the camera optics, which comprises a third folding mirror 14 and an objective 15, with aims to focus the sample and align the line of sight on the camera sensor 16, so that the Raman/LIBS sampling point is fully determined within the image.

The handheld probe provides in addition a system for stabilization during measurement, comprising three pointers 17, with a main one adjusted so that the tip position in 3D space defines the sampling point.

The nominal operation starts with video acquisition, i.e. activating the camera and the illumination source and streaming images in real-time at video frame-rate towards a display 18 located either in an external device or in the probe itself. The operator scans the sample surface with the probe looking for an interesting feature. Once selected, the probe stability pointers 17 shall be placed in contact with the sample, and then the measurement cycle, previously configured, can be triggered by external means or through a button conveniently placed on the probe grip. A typical measurement sequence would comprise several steps:

Firstly, there is an initial context image acquisition, to register the measurement area for future reference. The user may choose the area of application of the two analyses in the display.

Then, after sending the activation instruction, a Raman spectroscopic measurement (nondestructive) is carried out by means of the emission of the reflected collimated laser beam through the focuser. The sample reflects light, which is received by the Raman collection barrel and sent to the Raman spectrometer.

Then, a LIBS spectroscopic measurement (destructive) is carried out over the same area. The plasma cloud generated when the sample receives the expanded laser beam is captured by the LIBS collection barrel.

Finally, the display shows a final context image, that allows to confirm that the sample point during the Raman/LIBS measurement was the selected one.

## Claims

1. A device for obtaining data from a sample, the device comprising
an external equipment which comprises an external laser source configured to generate laser light, a Raman spectrometer and an external LIBS spectrometer; and
a handheld probe comprising a first module, a second module, a third module, a fourth module, a fifth module and a focuser and a camera module,
wherein
the first module comprises an excitation barrel (1), a first folding mirror (2) and a first dichroic (3), wherein the excitation barrel (1) is connected to the external laser source and is configured to receive laser light and to produce a collimated laser beam, the first folding mirror (2) is arranged to receive and reflect the collimated laser beam and the first dichroic (3) is configured to receive the collimated laser beam reflected by the first folding mirror (2) and project the reflected collimated laser beam into a first direction;
the second module comprises a LIBS excitation source (6), a beam expander (7), a second folding mirror (8) and a second dichroic (9), wherein the LIBS excitation source (6) is configured to produce a pulsed laser beam, the beam expander (7) is configured to receive the pulsed laser beam and produce an expanded laser beam with the same collimation status as the collimated laser beam, the second folding mirror (8) is arranged to receive and reflect the expanded laser beam and the second dichroic (9) is configured to receive the expanded laser beam reflected by the second dichroic (9) and project the reflected expanded laser beam into the first direction;
the focuser (4) is arranged in the first direction and is arranged to receive the reflected collimated laser beam and the reflected expanded laser beam and focus them on a focusing point;
the third module comprises a Raman collection barrel (5) which is configured to receive sample light from the focuser and focus the received sample light on a first optical fibre which communicates with the external Raman spectrometer;
the fourth module comprises a LIBS collection barrel (10) which is configured to receive light emitted by a LIBS plasma cloud and focus the received light on a second optical fibre which communicates with the external LIBS spectrometer; and
the fifth module comprises an optical component (12) configured to reflect part of the sample light coming from the focuser (4), a diaphragm (13) configured to receive the light reflected by the optical component (12) and a camera system comprising an optical objective (15) and a detector (16), the camera system being configured to receive the light which passes through the diaphragm (13).

2. Device according to claim 1, further comprising a display connected to the camera, wherein the camera is configured to send a video signal to the display.

3. Device according to any of the preceding claims, further comprising three pointers, each pointer comprising a tip, wherein the three tips of the pointers define a plane which contains the focusing point.

4. Device according to any of the preceding claims, further comprising a visible light source, which is configured to project light over a zone which includes the focusing point.

5. Device according to any of the preceding claims, further comprising a third folding mirror (14) arranged in the path between the diaphragm and the camera system.

6. Device according to any of the preceding claims, wherein the optical component (12) is a beam sampler.

7. Device according to any of claims 1 to 5, wherein the optical component (12) is a third dichroic.
